# EUROPEAN PATENT SPECIFICATION

(11) **EP 3 635 649 B1**
(45) Date of publication and mention of the grant of the patent: **23.08.2023**
(21) Application number: 18733506.2
(22) Date of filing: 09.05.2018
(51) Int. Cl.: G06Q 10/04, G06Q 10/00, G06Q 50/02

(54) **AN AGRICULTURAL SYSTEM**
LANDWIRTSCHAFTLICHES SYSTEM
SYSTÈME AGRICOLE

(30) Priority: 09.05.2017 BE 201705337
(43) Date of publication of application: 15.04.2020
(73) Proprietor: CNH Industrial Belgium NV, 8210 Zedelgem (BE)
(72) Inventor: BOYDENS, Joachim, 8210 Zedelgem (BE); DEBBAUT, Thomas, 9932 Ronsele (BE); FERRARI, Luca, 41043 Formigine (Modena) (IT); VERHAEGHE, Didier, 8900 Ieper (BE); DE SMEDT, Bart, 9050 Ledeberg (BE); VANDERSTRAETEN, Nick, R, M,, 9770 Kruishoutem (BE)
(74) Representative: CNH Industrial IP Department
(86) International application number: PCT/EP2018/062070
(87) International publication number: WO 2018/206677

(56) References cited:
- EP-A2- 1 813 146
- WO-A2-2014/137533
- US-A1- 2010 036 569
- US-A1- 2012 112 896
- US-A1- 2016 078 611
- US-A1- 2016 249 533
- US-A1- 2017 013 772
- Anonymous: "Overview of the functions: Installation on a tractor Smart 3D sensors for agricultural machinery", , 1 November 2015 (2015-11-01), XP055795679, Retrieved from the Internet: URL:https://www.ifm.com/binaries/content/a ssets/microsites/o3m-smart-sensor/en/ifm-l ine-guidance-application-for-the-mobile-3d -smart-sensor-o3m151.pdf [retrieved on 2021-04-15]
- Paul Wolfgang ET AL: "Radarsensoren : neue Technologien zur präzizen Bestandsführung ; T. 2 Messung der Bestandsdichte und Ausblick", Landbauforschung Völkenrode, 1 January 2004 (2004-01-01), pages 87-102, XP055795658, Retrieved from the Internet: URL:https://www.openagrar.de/servlets/MCRF ileNodeServlet/timport_derivate_00030914/z i033842.pdf [retrieved on 2021-04-15]

## Description

### Background of the Invention

Determining properties of swath that is to be collected / picked up by an agricultural vehicle, such as a baler, a forage harvester or a windrower, can be beneficial for improving the operation of swath collection.

US 2016/249533 A1 discloses a controller for an unloading system. The unloading system comprises an unloading vehicle having an unloading apparatus and a collection vehicle having a container. The unloading apparatus is configured to direct material to the container driven in the vicinity of the unloading vehicle. The controller is configured to: receive image data representative of at least a portion of the container; receive a path information signal representative of a path that is to be followed by the unloading vehicle or the collection vehicle; and set an attribute of the unloading apparatus, the unloading vehicle, or the collection vehicle in accordance with the image data and the path information signal in order to direct the material from the unloading apparatus to the container.

US 2017/013772 A1 discloses methods and systems for determining the amount of material contained in a windrow. In particular embodiments, the methods and systems are applicable to agricultural applications, and in particular to hay yield monitoring. Systems include a remote sensing technology to determine windrow height. Remote sensing methods can include ultrasonic sensors, optical sensors, and the like. Systems can provide real time yield data.

US 2016/078611 A1 discloses a grain quality sensor comprising a lens, a filter, a photosite array, an illumination source, and an electronics module, wherein the illumination source directs light containing a known set of wavelengths onto a crop sample, wherein the lens picks up light reflected by the crop sample and directs it into the filter, which allows light to pass into different parts of the photosite array such that certain locations on the photosite array only get certain frequencies of the reflected light, wherein the electronics module is electrically connected to the photosite array and capable of determining which parts of the photosite array received light and what frequency the light received was, wherein the electronics module can analyze the optical data received by the photosite array, and wherein the analysis of the optical data is used to determine the composition of different parts of the crop sample.

### Summary of the Invention

According to a first aspect of the invention, there is provided the system of claim 1.

Advantageously, radar waves that are generated by the radar-sensor are capable of penetrating obscurants, such as dust, which are often present in agricultural environments. In this way, the radar-sensor is able to generate radar-data that is better representative of the swath.

The radar-sensor may comprise a directional radar-sensor. The swath-property-data may comprise swath-area-data that is representative of a cross-sectional area of the swath.

The controller may be configured to:
process the radar-data in order to determine:
   (i) swath-profile-data, which is representative of the location of the outer-surface of the swath; and
   (ii) ground-profile-data, which is representative of the location of the surface of the ground; and
process the swath-profile-data and the ground-profile-data in order to determine the swath-area-data.

The swath-property-data may comprise swath-volume-data that is representative of a volume of the swath.

The swath-property-data may comprise swath-moisture-data and / or swath-density-data that is / are representative of the moisture and / or density of the swath.

The controller may be configured to set the swath-moisture-data and / or swath-density-data based on the phase and / or amplitude of the radar-data.

The vehicle-control-instructions may comprise: vehicle-steering-instructions for automatically controlling the direction of travel of the agricultural vehicle; and / or vehicle-speed-instructions for automatically controlling the speed of the agricultural vehicle.

The vehicle-control-instructions may be configured to cause an output-device to provide instructions for an operator of the agricultural vehicle to set a speed and / or direction of travel of the agricultural vehicle.

The system may further comprise an agricultural vehicle that is configured to be operated in accordance with the vehicle-control-instructions. The agricultural vehicle may comprise a tractor, a baler, a forage harvester or a windrower.

There may be provided a computer program, which when run on a computer, causes the computer to configure any apparatus, including a controller, processor, machine, vehicle or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples.

The computer program may be provided on a computer readable medium, which may be a physical computer readable medium such as a disc or a memory device, or may be embodied as a transient signal. Such a transient signal may be a network download, including an internet download.

### Brief Description of the Drawings

Embodiments of the present invention will now be described by way of example and with reference to the accompanying drawings in which:
Figure 1a shows an example of an agricultural field;
Figure 1b shows schematically a cross-section of swath;
Figure 2 shows schematically a system that is associated with determining swath-property-data;
Figures 3a and 3b show examples of positions where a radar-sensor can be positioned on an agricultural vehicle;
Figure 4 shows an example of how swath can be imaged by a radar-sensor;
Figure 5 shows another example of how swath can be imaged by a radar-sensor; and
Figure 6 shows schematically a system that can determine vehicle-control-instructions for an agricultural vehicle based on swath-property-data.

### Detailed Description of the Drawings

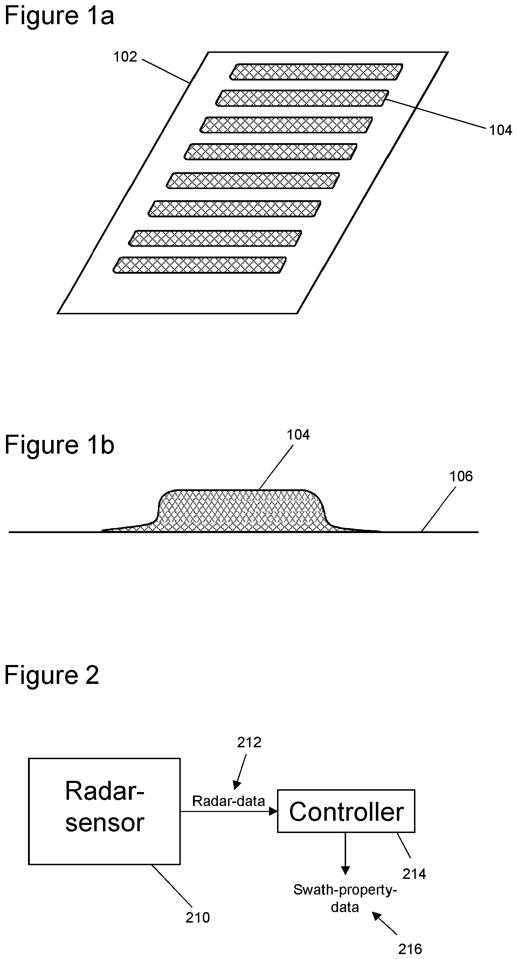

Figure 1a shows schematically an agricultural field 102. The field 102 includes rows of crop material, which may be hay, straw or similar products that have been left in the field 102 in the form of swaths 104. The swaths 104 are elongate rows of the products in question that are heaped in the transverse centre and tend to flatten at the respective transverse edges. Typically a field 102 that has undergone harvesting contains many, essentially mutually parallel, swaths 104, as shown in Figure 1a. The swaths 104 are spaced from one another by largely consistent gaps. The crop material in the swaths 104 can be picked up by an agricultural machine, such as a baler, a forage harvester or a windrower, as non-limiting examples.

Figure 1b shows schematically a cross-section of a row of swath 104, that is on the ground 106.

Figure 2 shows schematically a system for determining swath-property-data 216, which is representative of one or more properties of swath that is in a field. The system includes a radar-sensor / radar-system 210 that can acquire radar-data 212 that is representative of the swath in the agricultural field. As will be discussed in more detail below, the radar-sensor 210 may be mounted on an agricultural machine (not shown), and can be operational whilst the agricultural machine is picking up the swath from the field. That is, the radar-sensor 210 may have a field of view that encompasses portions of the swath that are to be picked up.

The system also includes a controller 214 that can determine the swath-property-data 216 based on the radar-data 212. It will be appreciated that the controller 214 can be located on the agricultural machine, or remotely from the agricultural machine. For example, the functionality of the controller 214 can be performed on a remote server, such as one "in the cloud".

Advantageously, the radar waves that are generated by the radar-sensor 210 are capable of penetrating obscurants, such as dust, which are often present in agricultural environments. Therefore, use of a radar-sensor 210 can be considered beneficial when compared with optical sensor systems. This can be because the radar-sensor 210 can use electromagnetic waves with a sufficiently long wavelength, such that there is lower scattering by the obscurants. In this way, the radar-sensor 210 is able to generate radar-data 212 that is better representative of the objects of interest (including the swath and / or the ground, as will be discussed below) than is possible with optical sensors. Therefore, improved reliability can be achieved in challenging environmental conditions.

Also advantageously, the radar-sensor 210 can be used at night and in fog, which may not be possible or convenient with optical systems.

The radar-data 212 can be representative of: (i) a distance to a detected object; and optionally (ii) a power / amplitude of a reflected radar signal; and / or (iii) a phase difference between a transmitted radar signal and a received radar signal. Any of the radar-sensors described herein can be two-dimensional or three-dimensional radar-sensors.

In some examples, the radar-sensor 210 comprises a directional radar-sensor. That is, it can generate radar-data 212 that is representative of both: (i) a distance to a detected object; and (iv) a direction to that detected object from the radar-sensor 210. The radar-data 212 can be provided as a plurality of coordinates that are representative of the locations from which reflected radar signals have been received, and in this example they are provided as polar coordinates.

A directional radar-sensor can be implemented as a MIMO (Multiple In, Multiple Out) radar-sensor, or a phased-array-radar-sensor. Both of which are well known in the art. A phased-array-radar-sensor can be implemented: for beamforming signals transmitted by radar-transmit-antennae; and / or for beamforming signals received at radar-receive-antennae. (As is known in the art, the radar-transmit-antennae may be the same physical antennae as the radar-receive-antennae.) (Also with the MIMO radars it is possible to perform beamforming).

The swath-property-data 216 may include swath-area-data that is representative of a cross-sectional area of the swath. The cross-section may be in a direction that is transverse to the longitudinal direction of an elongate row of swath, which may also be transverse to a direction of movement of the agricultural vehicle that is to pick up the swath. Such a cross-section is shown in Figure 1b.

The swath-property-data 216 may include swath-width-data that is representative of the lateral width of the swath.

The swath-property-data 216 may include swath-height-data that is representative of the height of the swath.

The swath-property-data 216 may include swath-centre-data that is representative of the centre of the swath. The swath-centre-data may be one-dimensional, in that it can be representative of a lateral-centre of the swath (from side-to-side as the swath is shown in Figure 1b), or a height-centre of the swath (from top-to-bottom as the swath is shown in Figure 1b). or the swath-centre-data may be two-dimensional, in that it can be representative of both a lateral-centre of the swath and a height-centre of the swath.

The swath-property-data 216 may include swath-extremity-data that is representative of the location of the extremity of the swath. The swath-extremity-data may be one-dimensional, in that it can be representative of lateral-extremities of the swath, or height-extremities of the swath. Also, the swath-extremity-data may be two-dimensional, in that it can be representative of both lateral-extremities and height-extremities of the swath. The swath-property-data may also include swath-profile-data, which is representative of the perimeter of the swath.

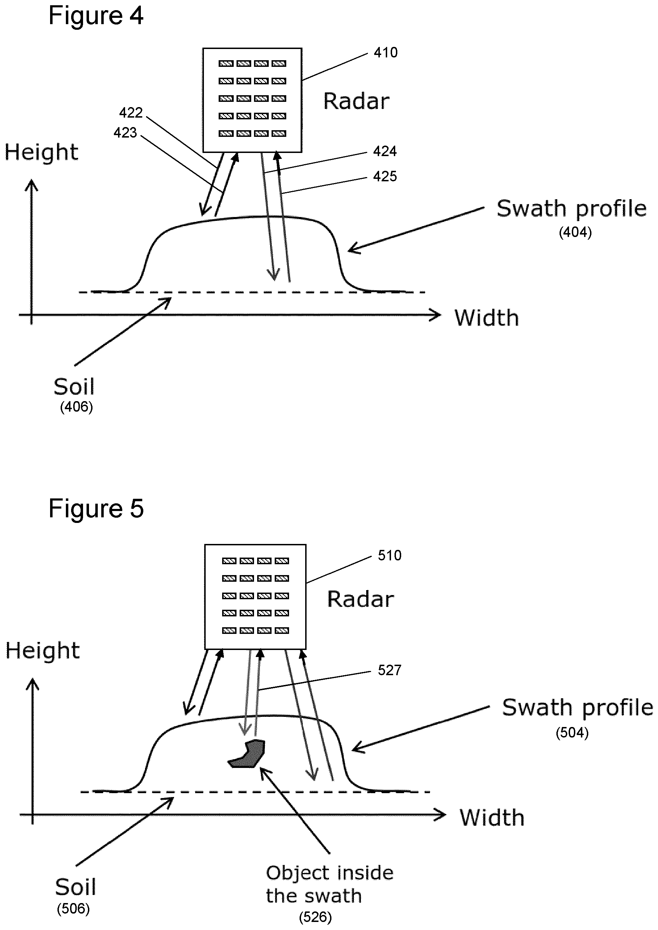

The swath-property-data 216 may include swath-volume-data that is representative of a volume of the swath. Further details of one example of how the controller 214 can determine swath-area-data, and also swath-volume-data, will be described below with reference to Figure 4.

The swath-property-data 216 includes foreign-object-indicator-data, which is representative of whether or not a foreign object has been detected. Advantageously, through appropriate selection of the frequency of the radar waves, the radar-data 212 can be representative of objects within the swath. That is, objects present inside the swath can provide additional reflections that are represented by the radar-data 212. Thus, it can be possible to identify in advance the presence of foreign objects inside the swath, and appropriate actions can be taken for the agricultural vehicle before it picks up the swath containing the foreign object.

The controller 214 can set the foreign-object-indicator-data as representative of a foreign object being present if the power / amplitude of a reflected radar signal is greater than a power-threshold-level. This can be particularly useful for detecting metal foreign objects because metal objects are known to provide reflected radar signals with a high power.

Advantageously, the controller 214 can process the radar-data 212 to detect the presence of non-ferromagnetic foreign objects. Therefore, the radar-sensor 210 can be used to detect objects that are not detectable by a metal detector, such as inox and alluminum objects. As will be appreciated, picking up such foreign objects can be very damaging to the agricultural machine that picks up the swath and / or any machine or person that subsequently handles the processed swath, for example in the form of a bale.

Also, the controller 214 can set the foreign-object-indicator-data as representative of a foreign object based on a distance to the detected object. In particular, based on a difference between the detected object and the distance to the ground and / or swath, as will be described below with reference to Figure 5.

In some examples, the swath-property-data 216 can include swath-moisture-data that is representative of the moisture of the swath. The controller 214 can set the swath-moisture-data based on the phase and / or amplitude of the radar-data 212. For instance, one or more calibration operations may be performed to determine how the moisture of the swath affects the phase and / amplitude of the reflected radar signals, such that algorithm parameter-values can be stored in memory, or a database can be loaded with appropriate reference values. Then, when in use, the controller 214 can apply an appropriate algorithm (with the set parameter-values), or use data stored in the database, to determine the swath-moisture-data based on the received radar-data.

In some examples, the swath-property-data 216 can include swath-density-data that is representative of the moisture of the swath. The controller 214 can set the swath-density-data based on the phase and / or amplitude of the radar-data 212, in the same way as for the swath-moisture-data as discussed above.

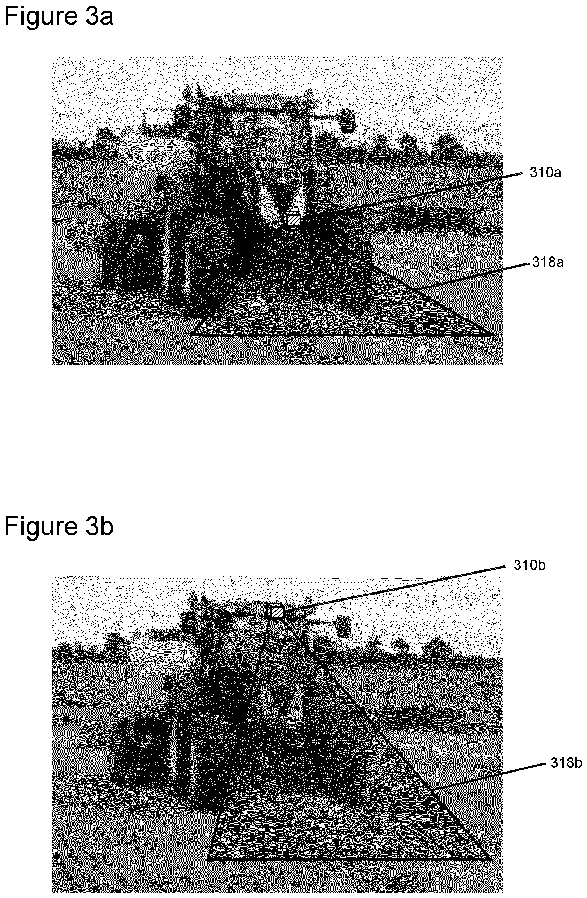

Figures 3a and 3b show examples of positions where a radar-sensor 310a, 310b can be positioned on an agricultural vehicle. In this example, the agricultural vehicle is a tractor that is towing a baler. In other examples, the agricultural vehicle can be a baler, a forage harvester, a tractor or a windrower. Any of these vehicles may or may not be self-propelled.

In Figure 3a, the radar-sensor 310a is located on a lower portion of the agricultural vehicle such that it has a low field of view 318a. In Figure 3b, the radar-sensor 310b is located on an upper portion of the agricultural vehicle such that it has a high field of view 318b. An advantage associated with placing the radar in an upper position, is that the field of view can be increased. However, this can involve a trade-off with decreased cross-range resolution, which is an ability to detect objects in a plane perpendicular to the wave. The cross-range resolution can depend on the angular resolution and the distance.

The radar-sensor can be associated with an agricultural vehicle in any way such that it acquires radar-data that is representative of swath in the agricultural field in the vicinity of the agricultural vehicle. As shown in Figures 3a, and 3b, the radar-sensor has a field-of-view 318a, 318b that is in front of the agricultural machine (in a direction that the vehicle is moving when it picks up the swath), such that the radar-data is representative of swath that is in front of the agricultural vehicle. In other examples, the radar-sensor can have a field-of-view that is to the side of the agricultural machine (in a direction that is transverse to the direction that the vehicle is moving when it picks up the swath), such that the radar-data is representative of swath that is to the side of the agricultural vehicle. Such an example can be used to scan a parallel row of swath, that will be subsequently picked up by the agricultural vehicle. That is, the swath-property-data may be acquired for a row of swath that is different to one that is in the process of being picked up by the agricultural vehicle. This can allow planning and future control operations to be determined in advance of the agricultural machine picking up the parallel row of swath.

In some examples, the radar-sensor can be located on an other vehicle (not shown), which is different to the agricultural machine that is to pick up the swath, yet still can be considered to be associated with the agricultural machine. For example, because the other vehicle can be controlled such that it takes a route that is associated with the agricultural machine, or is otherwise positioned with reference to the agricultural vehicle. The other vehicle can be a manned or an unmanned vehicle, and may be a land or an aerial vehicle (an unmanned aerial can be referred to as a drone). Use of an aerial vehicle can enable radar-data to be acquired from a radar-sensor at a relatively high altitude to obtain an overview of the field, thereby providing a wide field of view. Subsequently or alternatively, the aerial vehicle can stay with the agricultural vehicle at a lower altitude. For example, by flying above or ahead of the agricultural vehicle. The gathered radar-data can be streamed to the controller and / or "the cloud".

Figure 4 shows an example of a directional radar-sensor 410 for acquiring radar-data that is representative of a swath on soil. The radar-data represents two distinct profiles: (i) a swath-profile 404 (as represented by portions of the radar-data that can be considered as swath-profile-data), which is representative of the location of an outer-surface of the swath; and (ii) a ground-profile 406 (as represented by portions of the radar-data that can be considered as ground-profile-data), which is representative of the location of the surface of the ground / soil. By appropriate selection of the operating frequencies of the radar signals 422, 424 the radar waves can penetrate the swath. In this way, reflected radar signals 423, 425 can be detected due to both the swath profile and the soil.

Thus, the controller can process the swath-profile-data and the ground-profile-data in order to determine swath-area-data, which is representative of a cross-sectional area of the swath. Also, in examples where a three-dimensional radar-sensor 410 is used, the swath-profile-data and the ground-profile data can be representative of three-dimensional profiles, and the controller can process the swath-profile-data and the ground-profile-data in order to determine swath-volume-data, which is representative of a volume of the swath.

Figure 5 shows an example of a directional radar-sensor 510 for acquiring radar-data that is representative of a swath on soil, where a foreign object is located in the swath. In the same way as Figure 4, the radar-data represents a swath-profile 504 and a ground-profile 506. In this example, the radar-data also includes foreign-object-data, as represented by reflected radar signals 527 that are reflected back to the radar-sensor 510 by a foreign object 526 within the swath. As discussed above, the controller can determine portions of the radar-data as foreign-object-data (and therefore set foreign-object-indicator-data accordingly) if the power / amplitude of a reflected radar signal 527 is greater than a power-threshold-level.

In some examples, the controller can determine portions of the radar-data as foreign-object-data (and therefore set foreign-object-indicator-data accordingly) based on a distance to the detected object 526. For instance, the controller can determine a distance to the ground 506 and / or the outer surface of the swath 504 for a particular direction. The controller can associate the reflected radar signals as associated with either the ground of the swath based on their correlation (for instance in terms of one or more of distance / power / phase) with radar signals received in other directions. Then, if the radar-data also includes a reflected radar signal 527 that is not sufficiently correlated with the swath-profile-data or the ground-profile-data, then the controller may determine that the reflected radar signal 527 is associated with a foreign object. In one example, the reflected radar signal 527 may be considered not sufficiently correlated with the swath-profile-data or the ground-profile-data if it represents a reflection from an object that is more than a threshold distance away from the swath-profile 504 and / or the ground-profile 506.

In some examples, the controller can apply different power-threshold-levels to determine whether or not to classify the detected object as a foreign object. For example, if the reflected radar signal 527 is representative of a reflection from an object that is:
- less than a threshold distance away from the swath-profile 504 or the ground-profile 506, then the controller may compare the power of the reflected radar signal 527 with a first-power-threshold; and
- greater than a threshold distance away from the swath-profile 504 and / or the ground-profile 506, then the controller may compare the power of the reflected radar signal 527 with a second-power-threshold.

The second-power-threshold (applied when the potential foreign object is not near the outside of the swath) may be lower than the first-power-threshold, on the basis that it is less likely that the reflected radar signal 527 is from a discontinuity in the surface of the swath or the ground.

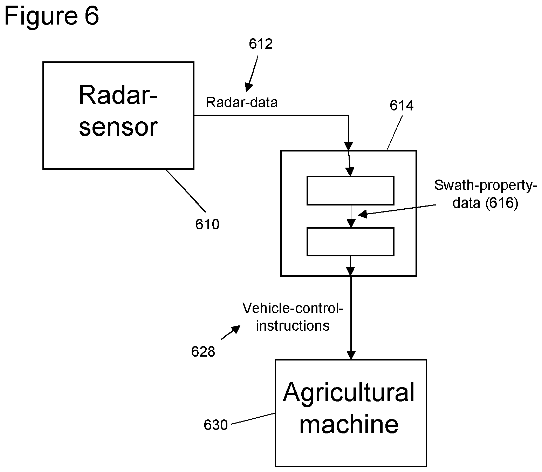

Figure 6 shows schematically a system that can determine vehicle-control-instructions 628 for an agricultural vehicle 630 based on swath-property-data 616.

The system includes a radar-sensor 610, which can be any radar-sensor described herein. The radar-sensor 610 provides radar-data 612 to a controller 614. The controller 614 processes the radar-data 612 and determines swath-property-data 616, which can be any type of swath-property-data 616 described herein. The controller 614 also processes the swath-property-data 616 in order to determine vehicle-control-instructions 628 for the agricultural machine 630. As discussed above, the agricultural machine 630 can be a baler, a forage harvester, a tractor or a windrower, and may or may not be self-propelled, as non-limiting examples.

The vehicle-control-instructions 628 can include vehicle-steering-instructions for automatically controlling the direction of travel of the agricultural machine 630. In this way, if the controller 614 determines that the agricultural machine 630 is not centralised on the swath (for example by identifying an offset between (i) the lateral centre of the swath, as defined by swath-centre-data for example, and (ii) the lateral centre of a pick-up / header of the agricultural machine 630), then the controller 614 can provide vehicle-control-instructions 628 that cause the steering of the agricultural machine 630 to be adjusted in order to centralise the agricultural vehicle 630 with reference to the swath (for example to reduce the offset). In some examples, the controller 614 can determine the centre of a pick-up / header of the agricultural machine 630 and / or the offset, by utilising a known relationship between the field of view of the radar-sensor 610 and the centre of a pick-up / header of the agricultural machine 630. For instance, the lateral centre of the field of view of the radar-sensor 610 may correspond with the lateral centre of the pick-up / header of the agricultural machine 630.

In this way, the agricultural machine 630 can be autonomously controlled such that it picks up the swath in an improved way, for example a way that results in less of the swath being wasted / missed. That is, swath guidance can be provided, for example by identifying the swath profile.

The vehicle-control-instructions 628 can also or alternatively include vehicle-speed-instructions for automatically controlling the speed of the agricultural machine 630. For instance, the controller 614 can determine crop-area-data or crop-volume-data (as the swath-property-data 616) and provide vehicle-speed-instructions based on the crop-area-data or crop-volume-data. In one example, the controller 614 can provide vehicle-speed-instructions for automatically increasing the speed of the agricultural machine 630 when the radar-data 612 is representative of a decreasing value for the crop-area-data or crop-volume-data, and *vice versa.* In some examples, the controller 614 can apply an algorithm to the crop-area-data or crop-volume-data in order to determine the vehicle-speed-instructions. In other examples, the controller 614 can use a database or look-up-table to determine the vehicle-speed-instructions based on the crop-area-data or crop-volume-data.

In this way, feed-forward control of the speed of the agricultural vehicle 630 (which may be a tractor that is towing a baler) can be performed, for example based on the volume or cross-sectional area of the swath.

The controller 614 determines vehicle-control-instructions 628 based on foreign-object-indicator-data (which is an example of swath-property-data 616). For instance, the controller 614 can determine vehicle-speed-instructions for automatically stopping the agricultural vehicle 630 in advance of the detected foreign object. In some examples, the controller 614 can also cause an output-device (such as a display or an audio device) to provide information to an operator of the agricultural vehicle 630 that is representative of the detected foreign object. For example, its location in the swath or its size, or any other information that will assist the operator in removing the foreign object.

In some examples, the controller 614 can determine vehicle-steering-instructions for automatically steering the agricultural vehicle 630 around the detected foreign object. The controller 614 determines vehicle-pick-up-instructions for automatically controlling a pick-up / header of the agricultural machine 630 such that it does not pick up the swath in the vicinity of the foreign object. For instance, the vehicle-pick-up-instructions may automatically control a pick-up / header such that it is raised (or the agricultural vehicle 630 is otherwise put in a non-pick-up-mode) in advance of the detected foreign object; and subsequently lowered (or the agricultural vehicle 630 is otherwise placed in a pick-up-mode) after the detected foreign object.

In some examples the vehicle-control-instructions 628 can cause an output-device (such as a display or audio device in the cab of the agricultural vehicle 630) to provide instructions for an operator of the agricultural vehicle 630 to set a speed and / or direction of travel of the agricultural vehicle 630.

In this way, foreign object detection (such as stones or metallic objects) can be performed before the foreign object is harvested. This can be especially useful for self-propelled forage harvesters, where inox or alluminum objects may not be detected by metal detection systems. It can be particularly advantageous to detect such foreign objects before they are harvested because it can be much quicker and easier for an operator of the agricultural machine to remove the foreign object from the swath, as opposed to from inside the agricultural machine. Therefore, this can result in the crop harvesting operation being much more efficient than would be the case if the foreign object were taken into the agricultural machine 630.

It will be appreciated from the above description that by proper post-processing of the radar-data, it can be possible to understand the distance related to each reflection. In addition, by using MIMO radars, it can also be possible to have information from the spatial location of the reflection points (distance and angles of arrival). Furthermore, by processing the shape of a radar signal waveform (e.g. amplitude, phase), a controller can determine physical and / or chemical information about the swath (e.g. density, moisture).

It will be appreciated that any of the control operations disclosed herein, such as setting the speed or direction of travel of the baler or an associated tractor, can be performed by comparing data with one or more threshold values, applying an algorithm to data, or using a look-up-table / database to determine a control value based on received / determined data.

## Claims

1. A system comprising:
a radar-sensor (210) associated with an agricultural vehicle, wherein the radar-sensor (210) is configured to acquire radar-data (212) representative of swath (104) in an agricultural field (102) in the vicinity of the agricultural vehicle; and
a controller (214) configured to determine swath-property-data (216) based on the radar-data (212), wherein the swath-property-data (216) comprises: swath-area-data that is representative of a cross-sectional area of the swath (104); and foreign-object-indicator-data;
wherein the controller is configured to set the foreign-object-indicator-data as representative of a foreign object being detected if the power of a reflected radar signal, as represented by the radar-data, is greater than a power-threshold-level;
wherein the controller is configured to determine vehicle-control-instructions (628) for the agricultural vehicle, based on the swath-property-data (616) and the foreign-object-indicator-data, wherein the vehicle-control-instructions (628) comprise vehicle-pick-up-instructions for automatically controlling a pick-up / header of the agricultural machine (630) such that it does not pick up the swath in the vicinity of a detected foreign object.

2. The system of Claim 1, wherein the radar-sensor comprises a directional radar-sensor.

3. The system of Claim 1, wherein the controller is configured to:
process the radar-data in order to determine:
(i) swath-profile-data, which is representative of the location of the outer-surface of the swath (404); and
(ii) ground-profile-data, which is representative of the location of the surface of the ground (406); and
process the swath-profile-data and the ground-profile-data in order to determine the swath-area-data.

4. The system of Claim 2, wherein the swath-property-data comprises swath-volume-data that is representative of a volume of the swath.

5. The system of Claim 1, wherein the swath-property-data comprises swath-moisture-data and / or swath-density-data that is / are representative of the moisture and / or density of the swath.

6. The system of Claim 5, wherein the controller is configured to set the swath-moisture-data and / or swath-density-data based on the phase and / or amplitude of the radar-data.

7. The system of Claim 1, wherein the vehicle-control-instructions comprise:
vehicle-steering-instructions for automatically controlling the direction of travel of the agricultural vehicle; and / or
vehicle-speed-instructions for automatically controlling the speed of the agricultural vehicle.

8. The system of Claim 1, wherein the system further comprises an agricultural vehicle that is configured to be operated in accordance with the vehicle-control-instructions.

9. The system of Claim 8, wherein the agricultural vehicle comprises a tractor, a baler, a forage harvester or a windrower.

## Patentansprüche

1. System mit:
einem Radarsensor (210), der zugehörig zu einem landwirtschaftlichen Fahrzeug ist, wobei der Radarsensor (210) dazu eingerichtet ist, Radardaten (212) zu erfassen, die kennzeichnend für einen Schwad (104) in einem landwirtschaftlichen Feld (102) in der unmittelbaren Umgebung des landwirtschaftlichen Fahrzeugs sind; und
einer Steuerung (214), die dazu eingerichtet ist, Schwad-Eigenschafts-Daten (216) basierend auf den Radardaten (212) zu bestimmen, wobei die Schwad-Eigenschafts-Daten (216) aufweisen: Schwad-Bereichs-Daten, die kennzeichnend für eine Querschnittsfläche des Schwads (104) sind; und Fremdobjekt-Indikations-Daten;
wobei die Steuerung dazu eingerichtet ist, die Fremdobjekt-Indikations-Daten als kennzeichnend für ein erfasstes fremdes Objekt festzulegen, wenn die Leistung eines reflektierten Radarsignals, wie es von den Radardaten repräsentiert wird, größer als ein Leistungs-Grenzwert-Niveau ist;
wobei die Steuerung dazu eingerichtet ist, Fahrzeug-Steuerungs-Befehle (628) für das landwirtschaftliche Fahrzeug basierend auf den Schwad-Eigenschafts-Daten (616) und den Fremdobjekt-Indikations-Daten zu bestimmen, wobei die Fahrzeug-Steuerungs-Befehle (628) Fahrzeug-Pick-up-Befehle zum automatischen Steuern eines Pick-ups/Erntevorsatzes der landwirtschaftlichen Maschine (630) aufweisen, so dass dieselbe nicht den Schwad in der unmittelbaren Umgebung eines erfassten Fremdobjekts aufnimmt.

2. System nach Anspruch 1, wobei der Radarsensor einen Richtungs-Radar-sensor aufweist.

3. System nach Anspruch 1, wobei die Steuerung eingerichtet ist zum:
Verarbeiten der Radardaten zum Bestimmen von:
(i) Schwad-Profil-Daten, die kennzeichnend für die Lage der äußeren Fläche des Schwads (404) sind; und
(ii) Boden-Profil-Daten, die kennzeichnend für die Lage der Oberfläche des Bodens (406) sind; und
Verarbeiten der Schwad-Profil-Daten und der Boden-Profil-Daten zum Bestimmen der Schwad-Bereichs-Daten.

4. System nach Anspruch 2, wobei die Schwad-Eigenschafts-Daten Schwad-Volumen-Daten aufweisen, die kennzeichnend für ein Volumen des Schwads sind.

5. System nach Anspruch 1, wobei die Schwad-Eigenschafts-Daten Schwad-Feuchtigkeits-Daten und/oder Schwaden-Dichte-Daten aufweisen, die kennzeichnend für die Feuchtigkeit und/oder die Dichte des Schwads sind.

6. System nach Anspruch 5, wobei die Steuerung dazu eingerichtet ist, die Schwad-Feuchtigkeits-Daten und/oder Schwad-Dichte-Daten basierend auf der Phase und/oder der Amplitude der Radardaten festzustellen.

7. System nach Anspruch 1, wobei die Fahrzeug-Steuerungs-Befehle aufweisen:
Fahrzeug-Lenk-Befehle zum automatischen Steuern der Bewegungsrichtung des landwirtschaftlichen Fahrzeugs; und/oder
Fahrzeug-Geschwindigkeits-Befehle zum automatischen Steuern der Geschwindigkeit des landwirtschaftlichen Fahrzeugs.

8. System nach Anspruch 1, wobei das System des Weiteren ein landwirtschaftliches Fahrzeug aufweist, das dazu eingerichtet ist, gemäß der Fahrzeug-Steuerungs-Befehle betrieben zu werden.

9. System nach Anspruch 8, wobei das landwirtschaftliche Fahrzeug einen Traktor, eine Ballenpresse, einen Feldhäcksler oder einen Schwader aufweist.

## Revendications

1. Système comprenant :
un capteur radar (210) associé à un véhicule agricole, dans lequel le capteur radar (210) est configuré pour acquérir des données radar (212) représentatives de l'andain (104) dans un champ agricole (102) à proximité du véhicule agricole ; et
un dispositif de commande (214) configuré pour déterminer les données relatives aux propriétés de l'andain (216) sur la base des données radar (212), dans lequel les données relatives aux propriétés de l'andain (216) comprennent : des données relatives à la surface de l'andain représentatives d'une section transversale de l'andain (104) ; et des données relatives à l'indicateur d'objet étranger ;
dans lequel le dispositif de commande est configuré pour définir les données de l'indicateur d'objet étranger comme représentatives d'un objet étranger détecté si la puissance d'un signal radar réfléchi, représentée par les données radar, est supérieure à un niveau de seuil de puissance ;
dans lequel le dispositif de commande est configuré pour déterminer les instructions de commande du véhicule (628) pour le véhicule agricole, sur la base des données de propriété de l'andain (616) et des données de l'indicateur d'objet étranger, dans lequel les instructions de commande du véhicule (628) comprennent des instructions de reprise du véhicule pour commander automatiquement un ramasseur/une tête de la machine agricole (630) de sorte qu'il/elle ne reprenne pas l'andain à proximité d'un objet étranger détecté.

2. Système selon la revendication 1, dans lequel le capteur radar comprend un capteur radar directionnel.

3. Système selon la revendication 1, dans lequel le dispositif de commande est configuré pour :
traiter les données radar afin de déterminer :
(i) les données relatives au profil de l'andain, qui sont représentatives de l'emplacement de la surface extérieure de l'andain (404) ; et
(ii) les données relatives au profil du sol, qui sont représentatives de l'emplacement de la surface du sol (406) ; et
traiter les données relatives au profil de l'andain et les données relatives au profil du sol afin de déterminer les données relatives à la zone de l'andain.

4. Système selon la revendication 2, dans lequel les données relatives aux propriétés de l'andain comprennent des données sur le volume de l'andain qui sont représentatives d'un volume de l'andain.

5. Système selon la revendication 1, dans lequel les données relatives aux propriétés de l'andain comprennent des données sur l'humidité de l'andain et/ou des données sur la densité de l'andain qui sont représentatives de l'humidité et/ou de la densité de l'andain.

6. Système selon la revendication 5, dans lequel le dispositif de commande est configuré pour définir les données sur l'humidité de l'andain et/ou les données sur la densité de l'andain sur la base de la phase et/ou de l'amplitude des données radar.

7. Système selon la revendication 1, dans lequel les instructions de commande
du véhicule comprennent :
des instructions sur la direction du véhicule pour commander automatiquement la direction de la marche du véhicule agricole ; et/ou
des instructions sur la vitesse du véhicule pour commander automatiquement la vitesse du véhicule agricole.

8. Système selon la revendication 1, dans lequel le système comprend en outre un véhicule agricole configuré pour être utilisé conformément aux instructions de commande du véhicule.

9. Système selon la revendication 8, dans lequel le véhicule agricole comprend un tracteur, une presse à balles, une récolteuse-hacheuse ou une andaineuse.
